# EUROPEAN PATENT SPECIFICATION

(11) **EP 1 892 966 B1**
(45) Date of publication and mention of the grant of the patent: **09.02.2011**
(21) Application number: 06425595.3
(22) Date of filing: 23.08.2006
(51) Int. Cl.: H04Q 3/00, H04L 12/24

(54) **System and method for provisioning a composite telecommunications services product**
System und Verfahren zur Bereitstellung eines aus mehreren Telekommunikationsdiensten bestehenden Produktes
Système et procédé de provisionnement d'un produit comprenant plusieurs services de télécommunication

(43) Date of publication of application: 27.02.2008
(60) Divisional application: 10182570.1
(73) Proprietor: Accenture Global Services GmbH, 8200 Schaffhausen (CH)
(72) Inventor: Napoleoni, Luana, 8200 Schaffhausen (CH); Brie, Olivier, 8200 Schaffhausen (CH)
(74) Representative: Crippa, Paolo Ernesto

(56) References cited:
- WO-A-97/29443
- WO-A2-2004/046858
- US-B1- 6 901 440

## Description

The invention relates to a system and a method for provisioning telecommunications services products that include multiple sub-products or services in response to a single customer order.

The rapid advances in communications technologies of recent years have greatly expanded the service options available to telecommunications consumers. Today consumers have choices over the types of services they choose to employ, as well as the technology platforms on which they elect to receive such services. Just a small sampling of the types of services consumers may take advantage of include voice communication, email, instant messaging, text messaging, internet access, audio and video broadcast services, and so on. Voice services may be provided over traditional land lines, wirelessly via a cellular telephone network, or over packet switched networks using Internet Protocols. Audio and video, traditionally broadcast wirelessly over the public airwaves as radio and television signals, are now available via broadband cable networks or as streaming media over the internet using Internet Protocols as the media transport layer. In sum, there are many different communications services available today. Likely there will be many more available in the near future. And there will be ever more flexible ways of delivering communications services to customers.

The proliferation of new services and the new mechanisms for delivering them provide great opportunities for telecommunications service providers. New services provide opportunities for new sales. In this environment the ability to quickly develop and roll out new telecommunications products and services will be a great competitive advantage. What is more, customers typically rely on a suite of telecommunications products and services to meet their communications needs. Often it is more convenient for customers to purchase or subscribe to a single umbrella product that is a composite of all of the individual products and services the customer needs. For example, a customer may wish to receive internet access, voice communications and television service from a single source and delivered via an IP network connection. Preferably the customer will purchase all three services as a single composite product that incorporates internet access (IA), voice over internet protocol service, and internet protocol television service (IPTV). For convenience, the composite product may be given its own descriptive name. For example, the product including IA, VoIP, and IPTV may be referred to as "Triple Play" based on the three services incorporated into a single product.

For customer service, accounting, and other business reasons, it is desirable to treat a composite product as a single product as opposed to an aggregation however,each service must be individually provisioned and activated wherever a customer purchases the composite product.

US 6,901,440 describes a service provisioning system configured to receive universal or generic service order commands for activating services in a target information management system. The universal/generic service order commands are sent to an order processing system where they are split into individual service components for element managers receive the respective service components and translate them into device specific 6,901,440, however, does not disclose a system that generates and/or processes orders for composite 97/29443 discloses a service provisioning system for use in distributed processing environments. The service provisioning system is used to negotiate for the use of separate sub-services to provide a single service. This document discloses a computing environment having an agent that includes a negotiation management module that is invoked to form a "contract "with another agent that provides a desired sub-service. Although this document provides an example of generating a customer quote to a does not describe any process for generating and/or processsing orders for composite telecommunications services products. WO Pub. No. 2004/046858 discloses a system architecture and method that allows service subscribers to self-provision subscribed services. The system architecture includes components for controlling service management, account management, and device management for facilitating the self-provisioning of services, including bundled services, by subscribers. However, this document does not provide any detail as to how a bundled service is provisioned.

An end-to-end solution for it provisioning the sub-products and services associated with a composite telecommunications services product is desirable. Preferably such a system would be capable of provisioning products based on a single customer order for a single composite product. Such a system should be capable of monitoring the provisioning of each service and reporting exceptions, as well as reporting when all provisioning tasks for all of the services are complete.

The invention relates to a system and method for product comprising a plurality of sub-products or services in response to a single customer order. A composite telecommunications product may comprise, for example, a Triple Play product that includes Internet Access (IA), Voice over Internet Protocol (VoIP), and Internet Protocol Television (IPTV) services bundled together as a single product. The present invention allows all three sub-products to be automatically provisioned in response to a single customer order for the composite Triple Play product.

A system for provisioning orders for a composite telecommunications services product that includes a plurality of bundled services includes a Customer Relationship Management Module (CRM) for interacting with a customer. The CRM generates an order for the composite telecommunications services product. The order generated by the CRM identifies the composite telecommunications services product and each bundled service that comprises the composite product. An Integrated Order Management System (IOM) is also provided. The IOM receives the customer order, decomposes the order, and identifies tasks that must be performed for provisioning each of the bundled services. Finally a provisioning system is provided for performing the provisioning tasks identified by the IOM. The provisioning system is adapted to communicate the status of the various tasks back to the IOM.

A method of provisioning a communications product comprising a plurality of communications services includes providing an enterprise application integration module for facilitating data communication between a plurality of systems applications according to a shared data model. A customer order for the communications product is generated in a customer relationship management application. A service order for provisioning request for provisioning the product is sent from the customer relationship management application to an order management application associated with the enterprise application integration module. The order management application parses the service order for provisioning request and generates a list of tasks for provisioning the product. The provisioning tasks are communicated to a provisioning application, and the status of each task is monitored by the order management application. The provisioning application performs the provisioning tasks and alerts the customer relationship management application when the provisioning tasks are complete.

Features and advantages of the invention will be, or will become apparent to one with skill in the art upon examination of the following figures and detailed description. It is intended that all such features and advantages be included within this description, be within the scope of the invention, and be protected by the following claims.

Figure 1 is a block diagram of an application integration framework according to an embodiment of the invention.

Figure 2 is a graphical illustration of the relationships between the main data objects of the shared data model employed by the application integration framework.

Figure 3 is a table showing the data fields in the shared data object Header.

Figure 4 is a table showing the data fields in the shared data object Address.

Figure 5 is a table showing the data fields in the shared data object Contact.

Figure 6 is a table showing the data fields in the shared data object Customer.

Figure 7 is a table showing the data fields in the shared data object Service Account.

Figure 8 is a table showing the data fields in the shared data object Organization.

Figure 9 is a table showing the data fields in the shared data object Payment Data.

Figure 10 is a table showing the data fields in the shared data object Billing Account.

Figure 11 is a table showing the data fields in the shared data object Service Order.

Figure 12 is a table showing the data fields in the shared data object Product.

Figure 13 is a table showing the data fields in the shared data object Refill.

Figure 14 is a table showing the data fields in the shared data object Billing Profile.

Figure 15 is a table showing the data fields in the shared data object Service Order Response.

Figure 16 is a table showing the data fields in the shared data object Adjustment.

Figure 17 is a table showing the data fields in the shared data object Attribute.

Figure 18 is a sequence diagram illustrating the messages exchanged in response to Service Order For Provisioning and Service Order for Provisioning Response business events.

Figure 19 is a sequence diagram illustrating the messages exchanged in in order to activate a provisioned product.

Figs. 20A-20D are an example Triple Play Service Order For Provisioning message.

Fig. 21 is an example of an Internet Access Service Order For Provisioning Response message.

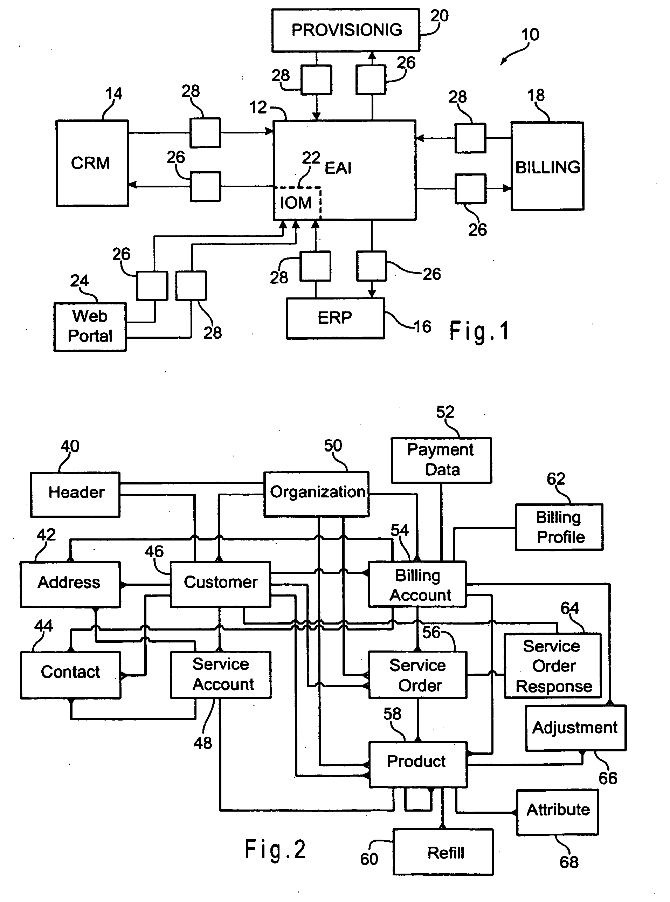

Fig. 1 shows a block diagram of an application integration framework 10 for integrating the various systems and applications employed by a telecommunications service provider for managing the delivery of telecommunications services to customers. The integration framework 10 comprises a plurality of substantially independent applications united by a central Enterprise Application Integration (EAI) module 12. The EAI 12 acts as an intermediary for allowing the various applications to communicate data to one another. Applications integrated within the integration framework 10 may include, a Customer Care (CC) or Customer Relationship Management (CRM) system 14, an Enterprise Resource Planning (ERP) system 16, a Billing system 18, a Provisioning system 20 and an internet web portal 24. Additional applications may be integrated as necessary to support the various needs of a particular telecommunications operator.

A CRM system 14 manages customer relationships in an organized manner so that management, sales people, customer service representatives, and perhaps even customers themselves, may directly access information regarding purchased products, available offers, hardware and other service delivery requirements, and so forth. CRM 14 may be provided by a commercially available customer relationship management package such as Siebel provided by Oracle The billing system 18 provides invoicing and accounting functions for the products and services delivered to customers. The functions of the Billing system may include maintaining billing data, maintaining a catalog of available products and services, maintaining rates and applying discounts, aggregating recurrent charges and usage charges, generating customer bills, and so forth. The billing system 18 may be Geneva provided by Convergys. The ERP system 16 is intended to help manage business operations including product planning, parts purchasing, inventory maintenance, interacting with suppliers, tracking orders, and the like. The ERP system 16 may be R/3 provided by SAP. The provisioning system 20 performs the functions necessary to set up and deliver a service. The provisioning system provides all of the services necessary to set-up a service, including equipment, wiring and transmission. The provisioning system covers the functionality required for the activation and deactivation of products and services on network elements, including configuring network elements, programming network databases with customer information, and so forth. The provisioning system 20 may be the Imagine OSS (iOSS) system provided by Accenture. The web portal 24 allows external users, including customers and external applications, to share data with the various other applications integrated by the integration framework 10. The web portal 24 may be ACS for Customer Portal provided by Accenture.

The EAI module 12 is the heart of the integration framework 10. The EAI module 12 may be based on a number of different platforms, such as Microsoft Biztalk 2004, Tibco, BEA,. The EAI 12 allows the various applications to seamlessly exchange data using a shared data model. The EAI 12 allows the various applications to act in a cohesive manner to accomplish a number of logical and cross functional business processes.

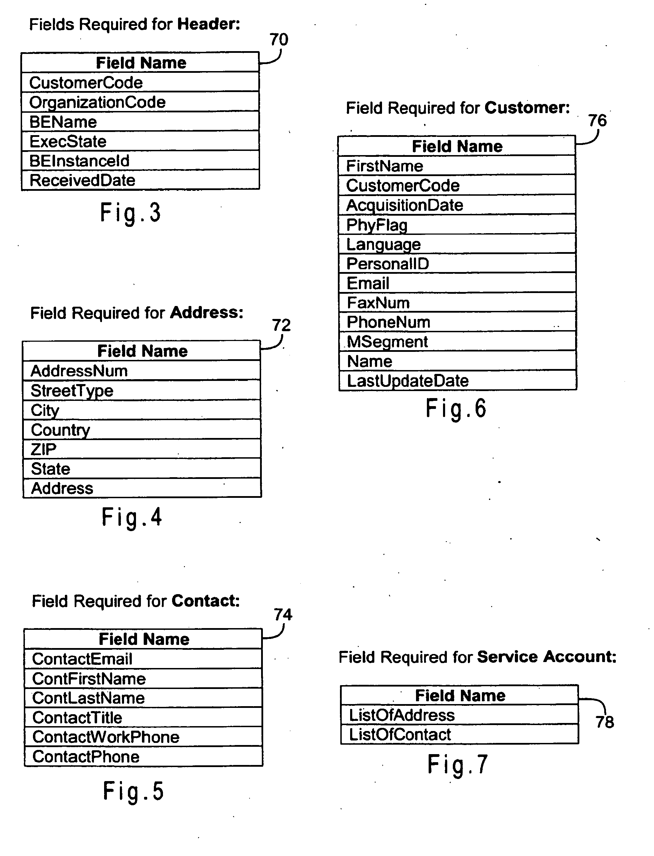

Fig. 2 shows the primary data objects of the shared data model employed by the integration framework 10 and the relationships between the various data objects. A Header 40 contains internal EAI routing information. Header is used to keep track of the status of business events and to determine message routing. Fig. 3 is a table 70 listing the data fields in a Header data object.

The data object Address 42 describes a customer's primary address. Fig. 4 is a table 72 listing the data fields in an Address data object.

The data object Contact 44 defines a person who is a customer's main contact person. If a customer is an individual the customer and the contact will be one and the same. If the customer is a business however, a Contact may be a person at the business responsible for obtaining and administering telephone and other telecommunications services. Figure 5 is a table 74 describing the data fields comprising a Contact data object.

The data object Customer 46 represents the entity for which services are provided. The Customer may be an actual human person, a company, or some other legal entity capable of entering transactions and buying products and services. Fig. 6 is a table 76 describing the data fields comprising a Customer data object.

The data object Service Account 48 represents the address(es) and the contact(s) for a particular customer. The Service Account data object assigns a contact and an address to specific products or services. Fig. 7 is a table 78 describing the data fields comprising a Service Account data object.

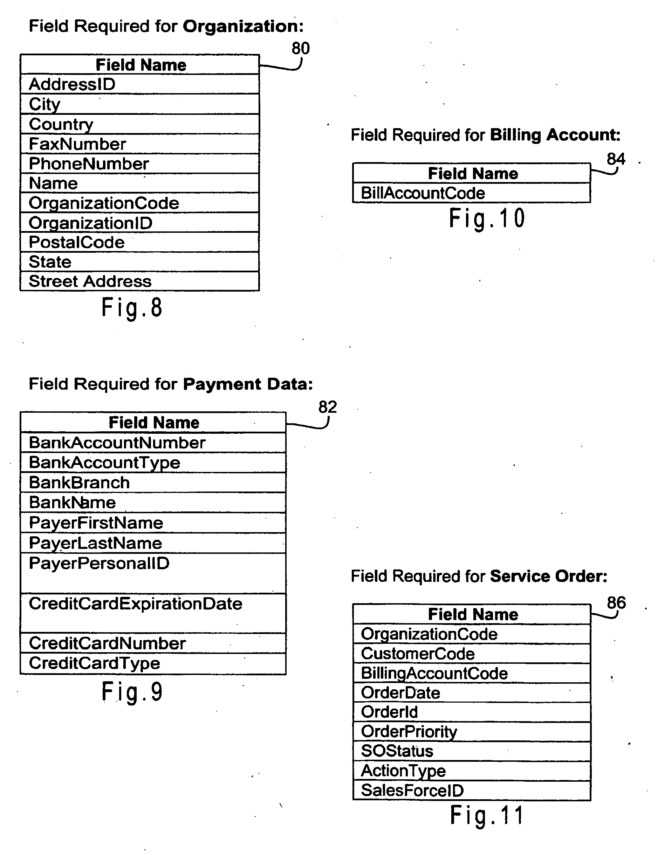

The data object Organization 50 represents the organization a customer belongs to. Fig. 8 is a table 80 describing the data fields comprising an Organization data object.

The data object Payment Data 52 contains information to be passed on to various applications depending on the type of payment, for example, the bank account number, bank name, bank branch, and so forth. Fig. 9 is a table 82 describing the data fields comprising a Payment Data data object.

The data object Billing Account 54 identifies the entity that will be invoiced by the billing system 18. The Billing Account contains the information needed by the billing system to generate bills for the products and services consumed by a customer. Fig. 10 is a table 84 describing the data fields comprising a Billing Account data object.

The data object Service Order 56 contains general information regarding an order such as customer information, the billing account information, the order type, and so forth. Fig. 11 is a table 86 describing the data fields comprising a Service Order data object.

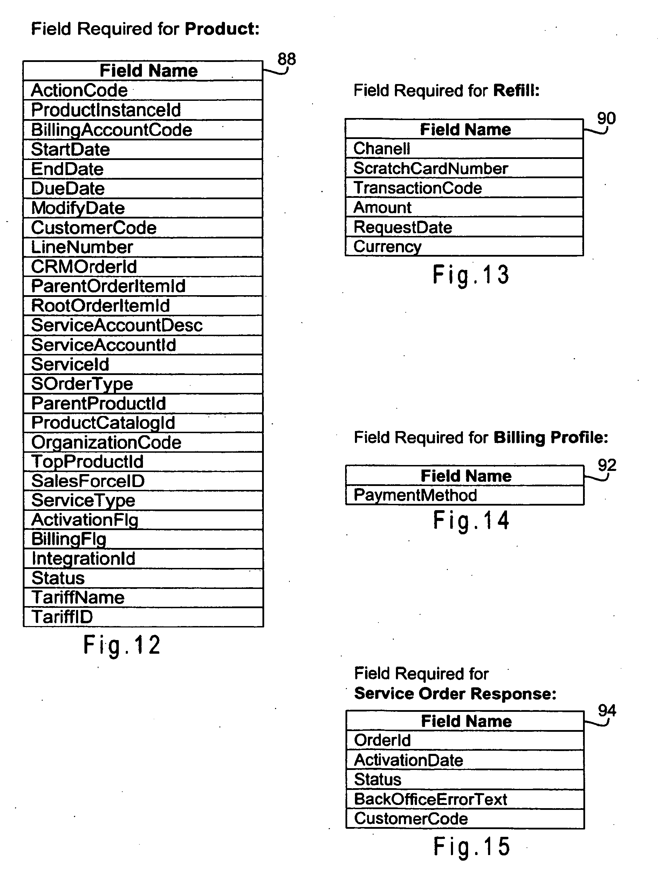

The data object Product 58 contains information for identifying various products and services available to customers. The data within the product data object 58 includes data relating to the tasks that must be performed by the billing and provisioning systems 18, 20 and for tracking the status of such tasks. Fig. 12 is a table 88 describing all of the data fields comprising a Product data object.

The data object Refill 60 represents a refill request by a customer to refill or recharge a pre-paid product or service. Fig. 13 is a table 90 describing the fields comprising a Refill data object.

The data object Billing Profile 62 contains information relating to how and when (i.e., how often) a bill is sent to a customer. Fig. 14 is a table 92 describing the data fields comprising a Billing Profile data object.

The data object Service Order Response 64 includes data forming an acknowledgment from the provisioning system 20 to the CRM 14 indicating that the requirements for provisioning the products associated with a specific order have been fulfilled. Fig. 15 is a table 94 describing the data fields comprising a Service Order Response data object.

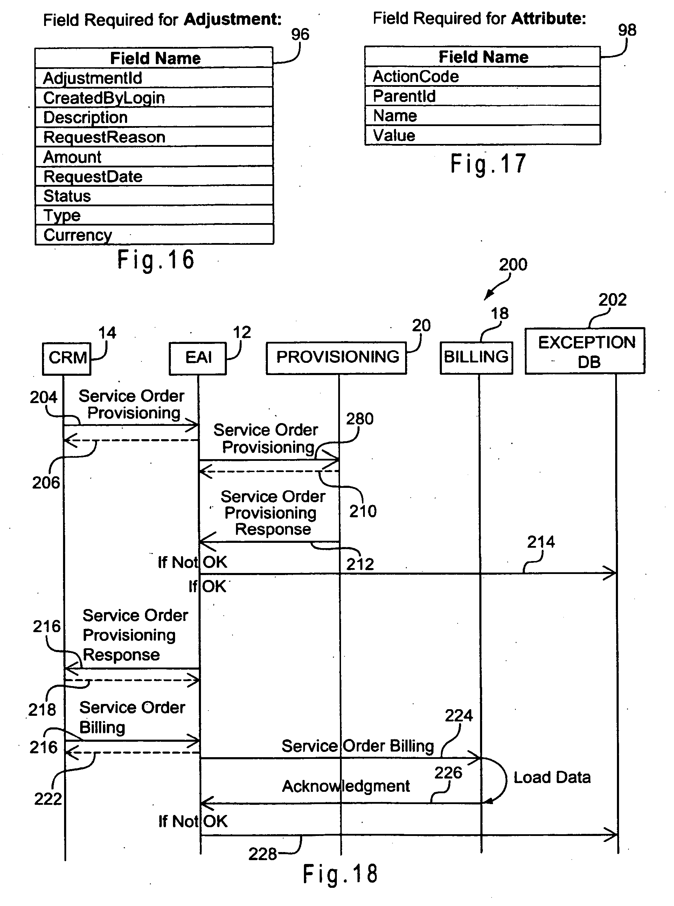

The data object Adjustment 66 represents an adjustment that may be made to the balance of either a post-paid account or on a pre-paid product. Fig. 16 is a table 96 describing the data fields comprising an Adjustment data object.

The data object Attribute 68 includes parameters that define the characteristics of each product or service which are needed by the provisioning and billing applications. Fig. 17 is a table 98 describing the data fields comprising an Attribute data object.

Returning to Fig. 1, a plurality of unique input and output interfaces 26, 28, are constructed between the individual applications and the EAI module 12. The input and output interfaces 26, 28 support all messages necessary to transport data from one application to another so that data generated in one application may be used by another. The ability to share data in this way allows the integrated applications to work in concert with one another to efficiently perform all of the tasks necessary to manage the delivery of telecommunications services to customers. The various input interfaces 26 may be adapted to translate data from an application's native format into the format of the shared data model employed by the EAI when an application publishes data for use by another application. Similarly, the output interfaces 28 may be adapted to translate data from the format of the shared data model into an application's native format when an application receives data from another application via the EAI 12.

An integrated order management module (IOM) 22 is associated with the EAI 12. The IOM 22 processes and tracks customer orders. Customer orders processed by the IOM 22 may require provisioning, changing or de-provisioning various services. The capabilities of the IOM 22 include process and workflow management, order decomposition, order re-composition, task management, status management, order and status reporting, jeopardy and service level agreement (SLA) reporting, supplement processing, cancel processing, move, change and delete actions, and so forth.

Within the integration framework 10, data are exchanged between applications according to a publish and subscribe format using predefined structured data messages referred to as Business Events. Each Business Event defines a specific message format for delivering specific data from one application to another. The publishing application, the subscribing application and the data objects contained within the message are defined for each type of Business Event. Separate Business Events are defined for each type of data transaction that must occur between the various applications. Thus, for any given implementation of an integration framework 10 there will be a limited number of predefined Business Events corresponding to the particular data transactions required by the particular applications integrated by the framework. All data exchanges between the various applications take place via messages corresponding to the format requirements of one or another of the predefined Business Events. According to the implementation shown in Fig. 1 predefined Business Events may include:
- Customer Create
- Modify Customer General Data
- Modify Customer Fiscal Address
- Create Account
- Modify Account General Data
- Modify Account Billing Profile
- Modify Account Bill To Person
- Modify Account Bill To Address
- Modify Account Payment Data
- Service Order For Provisioning
- Service Order For Provisioning Response
- Service Order For Billing
- Acknowledgment Event
- Activation
Each predefined Business Event includes specified data objects for routing the corresponding message and communicating the appropriate data associated with the Business Event to the appropriate application. Some Business Events relate to business processes such as establishing or modifying customer accounts, while others relate to operational processes such as provisioning network elements for delivering products and services. The Business Events Service Order For Provisioning, Service Order For Provisioning Response, and Activation are related to provisioning network products and services.

A Service Order For Provisioning message is published by the CRM 14 in response to a customer order. A Service Order For Provisioning message includes all of the data needed by the provisioning system 20 to provision, de provision, or modify the product(s) or service(s) called for in a customer order. An order may include a single product or a composite product that includes a plurality of sub-products. Furthermore, each product or sub-product may include different attributes such as tariffs, bandwidth requirements, hardware requirements, and the like. A separate address or a separate contact may be associated with each product, sub product, or service. Thus, a message corresponding to a Service Order For Provisioning Business Event must contain the following Shared Data Objects:
- Header
- Service Order
- (List of) Products
- (List of) Attributes
- Service Account
- (List of) Addresses
- (List of) Contacts

The List Of Products relates to each product associated with an order, including the sub-products or services associated with a composite or bundled product. The List Of Attributes relates to the various attributes associated with each product identified in the List Of Products, as do the List Of Addresses and the List Of Contacts.

A Service Order For Provisioning Response message is published by the provisioning system in response to a Service Order For Provisioning Message. The CRM is the only subscriber to a Service Order For Provisioning Response message. A Service Order for Provisioning Response message contains the Shared Data Objects:
- Header
- Service Order Response

Finally, an Activation message may be published by the Web Portal 24 or the CRM 14 depending on how the service activation process is set up. In either case, the provisioning system 20 is the subscriber. An Activation Message is published when the equipment necessary to deliver a service to a customer is in place and the network elements necessary to deliver the service have all been configured and the customer is ready to being using the service. An Activation Message includes the Shared Data Objects:
- Order Item
- (List of ) Attributes.

Fig. 18 is a sequence diagram 200 showing an overview of the order provisioning process employing the integration framework 10. The sequence diagram 200 illustrates the various messages exchanged between the CRM 14, the EAI 12, the billing system 18, and an exceptions handling database 202 associated with the IOM 22. The provisioning process begins in the CRM 14 when a customer orders a new product, requests changes to an existing product subscription, or cancels an existing product subscription. A customer service representative enters the order in the CRM 14 and the CRM begins processing the order. The CRM 14 initiates the provisioning process by publishing a Service Order For Provisioning message to the provisioning system. The Service Order For Provisioning message 204 is first sent from the CRM 14 to the EAI 12. Details of the Service Order For Provisioning message are echoed back to the CRM 14 at 206 so that the CRM can verify that the Service Order For Provisioning message was accurately transmitted to and received by the EAI 12. The EAI 12 then forwards the Service Order For Provisioning message to the provisioning system at 208. The provisioning system similarly echoes the received message back to the EAI 12 at 210, to ensure accurate transmission of the Service Order For Provisioning message from the EAI 12 to the provisioning system 20. The provisioning system 20 provisions the network elements necessary to deliver the product (or products) identified in the Service Order for Provisioning message to the customer specified in the original order. When provisioning is complete the provisioning system 20 publishes a Service Order For Provisioning Response message to the CRM 14 via the EAI 12. The Service Order for Provisioning Response message is sent from the Provisioning System 20 to the EAI at Step 212. The EAI 12 examines the contents of the message. If the Service Order For Provisioning Response message indicates that there was a problem provisioning the order the EAI 12 forwards the Service Order For Provisioning message to the Exceptions Database 202 at step 214. Regardless of whether the Service Order For Provisioning Response includes an error message, the EAI 12 then forwards the Service Order For Provisioning message to the CRM 14 at 216. The CRM 14 echoes the Service Order For Provisioning Response message back to the EAI 12 at 218 to ensure that the message was accurately transmitted to and received by the CRM 14. If the Service Order For Provisioning Response does not include notice of any provisioning errors, provisioning is complete and the operational systems and components necessary to deliver the service to the customer are in place and properly configured to deliver the service to the customer. However, while provisioning is complete, additional business processes may be required to begin monitoring the service and to account for the customer's usage and bill for the service.

When provisioning a composite product that includes multiple sub-products or services, the provisioning process becomes more complex. In general, the CRM 14 initiates the provisioning process by publishing a Service Order For Provisioning message, and the process concludes when the CRM receives a Service Order Provisioning Response from the provisioning system 20 indicating that the product, including all of the sub products and services, has been successfully provisioned. However, a number of intermediate steps may be required to successfully provision the individual sub products and services bundled together to create the single composite product. In this case, the CRM 14 publishes a Service Order For Provisioning message that includes Product shared data objects for the composite product as well as for each of the individual sub-products or services included in the composite product. The EIA 12 receives the Service Order For Provisioning message and before forwarding the Service Order For Provisioning message to the provisioning system 20 diverts it to the IOM 22. The IOM 22 decomposes the Service Order For Provisioning message and identifies each of the products that must be provisioned in order to implement the entire composite product. The IOM 22 generates a list of tasks that must be performed before provisioning the composite product is complete. The task list is generated based on product configuration data stored in a Product Catalog associated with the IOM 22. The task list is not necessarily limited to provisioning the network elements necessary to deliver the service, but may also include manual tasks such as shipping/installing Customer Premises Equipment (CPE), activating services once the CPE equipment is installed, and so forth. The IOM 22 communicates the various tasks to the appropriate systems for carrying out the identified tasks, and monitors the status of the tasks as the various systems carry them out. Once all of the tasks are complete and the provisioning system 20 publishes a Service Order For Provisioning Response indicating that the composite product has been successfully provisioned, the IOM 22 causes the EAI to forward the Service Order For Provisioning Response message to the CRM 14 and provisioning is complete.

An example of a composite product that includes a plurality of sub-products or services is the "Tripe Play" product that includes Internet Access (IA), voice over internet protocol (VoIP), and internet protocol television (IPTV) services bundled into a single product. In this case a customer subscribes to a single product - the Triple Play - and receives all three services: IA, VoIP and IPTV. Since the three services are bundled together as a single product, it is desirable that they be provisioned together in response to a single order.

When a customer orders the Triple Play, a customer service representative (CSR) enters the order in the CRM 14. The CRM 14 publishes a single Service Order For Provisioning message to the provisioning system 20 as described above. In order to provision the Triple Play product, the provisioning system must provision each of the IA, VoIP and IPTV services. Therefore, the Service Order For Provisioning message generated by the CRM 14 in response to the Triple Play order must include the data necessary to provision all three services. As with any Service Order For Provisioning message, the Service Order For provisioning message for provisioning the Triple Play product must include a Header, a Service Order, a List of Products, a List of Attributes, a Service Account, a List of Addresses, and a List of Contacts.

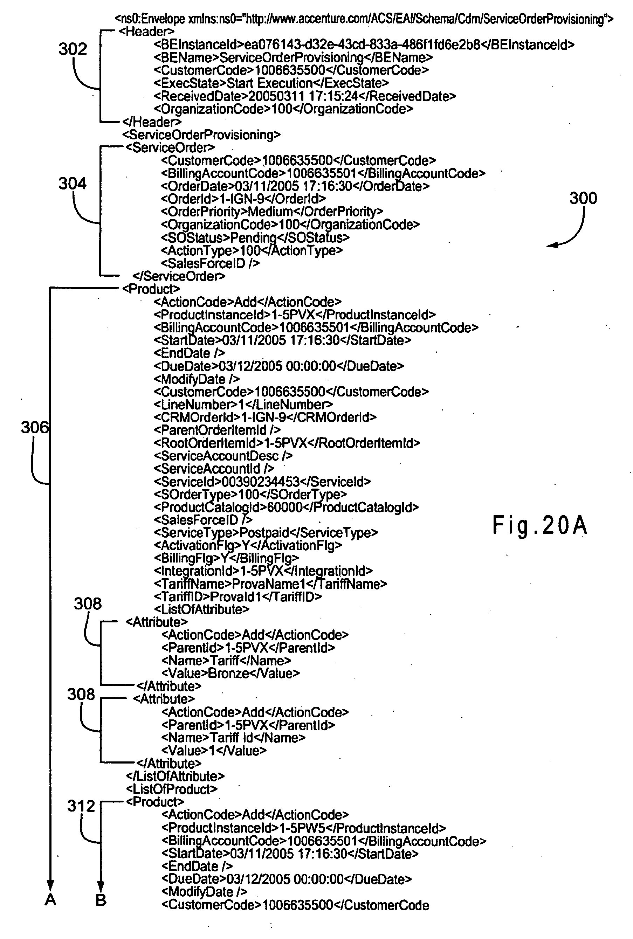

A sample Service Order For Provisioning message 300 for provisioning a Triple Play product is shown in Figs. 20A 20D. The data objects contained in the Service Order For Provisioning message 300 correspond to those described above for a Service Order For Provisioning Business Event, namely a Header 302, a Service Order 304, a Product 306, Attributes 308, 310 relating to the Triple Play product 306, and Service Account 342. The Service Order For Provisioning message 300 further includes Product data objects 312, 326, 336 relating to the Internet Access, VoIP and IPTV sub-product components of the Triple Play product. Attribute data objects 314, 316, 318 are associated with the product 312, as is the Service Order data object 320. The Service Order data object further includes Address data object 322 and Contact data object 324. Attribute data objects 328, 330 and 334 are associated with Product 326, and Attribute data objects 338, 340 are associated with Product 336.

Note that the Product data object 306 associated with the composite Triple Play product includes the data fields defined for a Product data object (see Fig. 12). Of special note are the ActionCode, ProductInstanceID, LineNumber, CRMOrderID, ParentOrderID, RootOrderID, and ProductCatalogID fields. The value ADD in the ActionCode field indicates that the Triple Play is a new product to be added to the customer's account. Alternative ActionCodes might call for the modification or cancellation of a product or service described in a Service Order For Provisioning message for a product to which the customer already is a subscriber. The ProductInstanceID 1 5PVX is a unique identifier identifying this particular implementation of the product. The LineNumber is a sequential number identifying each line item in the product order. Each line item in turn corresponds to a particular product instance. The CRMOrderID identifies the CRM order. The ParentOrderID identifies the parent order from which a product depends within a product hierarchy in which products may have sub-products, and sub-products may have sub-sub-products and so forth.

For Product data object 306 there is no value entered for the parent order ID because the Product data object 306 is at the top of the product hierarchy. The RootOrderItemID identifies the top level order in the Service Element or Product hierarchy. In this case the RootOrderItemID points to the same value as the ProductInstanceID, namely 1-5PVX, because the Triple Play product is at the top of the product hierarchy. The ProductCatalogID field provides a unique product identifier. In this case, the value 6000 corresponds to the composite Triple Play product. The Attribute data objects 308, 310 correspond to the composite Product data object 306, and in this case provide tariff data related to the composite Triple Play product.

The Product data objects 312, 326 and 336 are nested within a ListOfProducts associated with the composite Triple Play Product data object 306. The Product data objects 312, 326, 336 relate to the Triple Play sub-products Internet Access 312, VoIP 326, and IPTV 336. For Product data object 312 the ActionCode again holds the value -ADD-, indicating that the Internet Access product is to be added to the customer's account as opposed to being modified or canceled. The ProductInstanceID 1 5PW5 is a unique identifier identifying the specific customer implementation of Internet Access. The LineNumber Value -2- indicates that the Internet Access product is the second line item in the original order from the CRM 14. Again, the CRMOrderID 1-IGN-9 identifies the original CRM order. The ParentOrderID value 1-5PVX identifies the composite Triple Play product as the parent product from which the Internet Access product depends within the established product hierarchy. The RootOrderID value 1-5PVX likewise points to the composite Triple Play product as the root product in the product hierarchy. Finally, the ProductCatalogID value 6001 is a unique identifier identifying the Internet Access product. The Product data object 312 further includes the Attribute data objects 314, 316, 318. The ActionCode value for each attribute data object 314, 316, 318 is again Add. The ParentID field for each data object 314, 316, 318 is I-5PW5 indicating that the attribute data objects 314, 316, 318 each relate to the Internet Access Product data object 312. The Attribute data object 314 relates to the bandwidth to be allocated to this particular instance of the Internet Access product, and Attribute data objects 316, 318 relate to the billing tariffs to be applied.

The Product data object 312 further includes the Service Account data object 320, which itself includes the Address data object 322 and the Contact data object 324. The Address data object 322 includes data identifying the primary customer address and the Contact data object 324 includes data identifying the primary customer contact.

Product data object 326 relates to the VoIP product. The data fields are similar to those in Product data object 312. The ProductInstanceID stores a unique value 1-5PWL, identifying the present implementation of the VoIP service product. LineNumber stores the value 3 indicating that the VoIP product was the third line item on the original order from the CRM. Again the ParentOrderID field and the RootOrderID field point to the composite ProductInstanceID 1 5PVX, since the VoIP product, like Internet Access, depends from the Triple Play composite product, and the Triple Play composite product is at the top of the product hierarchy. The ProductCatalogID 6003 is a unique identifier for the VoIP product. Finally, the Product data object 322 includes the Attribute data objects 328, 330, 332. The Attribute data objects 328, 330, 332 identify the appropriate tariff to be applied to the VoIP product. The Service Account data object 334 in this case holds no additional data.

Product data object 336 relates to IPTV. Again, the data fields in the Product data object 336 are similar to those in the Product data objects 312, 326. The ProductInstanceID 1 5PWP is a unique identifier for this particular implementation of the IPTV product. The CRMOrderID 1 IGN 9 identifies the original order created in the CRM, and the ParentOrderID and RootOrderID values, 1 5PVX in both cases, identify the Product data object 306 for the composite Triple Play product as the product from which the VoIP product depends, and as the product at the top of the product hierarchy, respectively. The ProductCatalogID 6002 is a unique identifier for the IPTV product. The Product data object 336 concludes with Attribute data objects 338, 340 which specify the tariffs to be applied to the IPTV product and the Service Account data object 342, which in this case holds no additional data. The Product data object 336 concludes the List Of Products associated with the Product data object 306 in the Service Order For Provisioning message 300. The Product data object 306, and the Service Order For Provisioning message 300 in general, conclude with the Service Account data object 344, which in this case contains no additional data.

By definition the CRM 14 publishes the Service Order For Provisioning message. The provisioning system 20 is the only subscriber. In the sequence diagram 200 of Fig. 18 described earlier, the Service Order For Provisioning message is sent from the CRM 14 to the EAI 12 and the EAI forwards it to the provisioning system 20. However, significant intermediary processing occurs before the EAI 12 forwards the Service Order for Provisioning message to the provisioning system 20. The EAI 12 first routes the Service Order For Provisioning message to the IOM 22.

The IOM 22 manages the tasks that must be performed to successfully provision the order. The IOM 22 decomposes the Service Order For Provisioning message, identifies the products and services contained therein, and generates a list of tasks that must be performed to successfully provision each of the identified products and services. The tasks may include both manual and automated tasks, such as shipping customer premises equipment (CPE) to the customer, installing and configuring the CPE, as well as network element configuration and other provisioning tasks performed by the provisioning system 20. The IOM 22 assembles the task list based on data stored in a Services Catalog associated with the IOM. The service catalog is where products, including bundled products containing multiple different products such as the Triple Play product, are created and the provisioning process for implementing the products is defined. Provisioning tasks are defined and stored in the Services Catalog during product creation or service definition. A task definition portion of the database maps key task related reference data important to provisioning an order.

In the case of the Triple Play product, the task list generated by the IOM 22 includes the following tasks:
- Internet Access CPE Shipment
- Internet Access Network Provisioning
- Internet Access Activation
- Internet Access CRM Update
- VoIP Network Provisioning
- VoIP Activation
- VoIP CRM Update
- IPTV Network Provisioning
- IPTV Activation
- IPTV CRM Update
- Triple Play CRM Update.

The IOM 22 communicates the tasks to the various systems responsible for carrying out the tasks and monitors their status. The IOM 22 communicates updates to the CRM 14 when various tasks are complete, and reports Errors to the exceptions database 202 when tasks fail to be completed in a satisfactory manner or fail to be completed within a desired period of time.

The tasks associated with provisioning the composite Triple Play product and the individual component products comprising the Triple Play product are monitored separately. Each product comprising the Triple Play product, or at least aspects of each product, may be provisioned in parallel with other products by the provisioning system 20. The IOM 22, however, initiates the various provisioning tasks in a single message to the provisioning system 20. The IOM 22 re-composes the Service Order For Provisioning message sent by the CRM 14 and causes the EAI 12 to forward it to the provisioning system 20. The provisioning system 20 then carries out all of the network provisioning tasks necessary to set-up and configure the network to deliver the component products of the Triple Play. The re-composed Service Order For Provisioning message is substantially identical to service order for provisioning message originally published by the CRM 14, except for the addition of various data for processing and tracking the progress of the order in the IOM 22. The provisioning system 20 receives the Service Order For Provisioning message and performs the services necessary to set up the products or service defined in the Service Order For Provisioning message. In the case of the Triple Play product, the provisioning system takes the steps necessary to provision Internet Access, VoIP and IPTV.

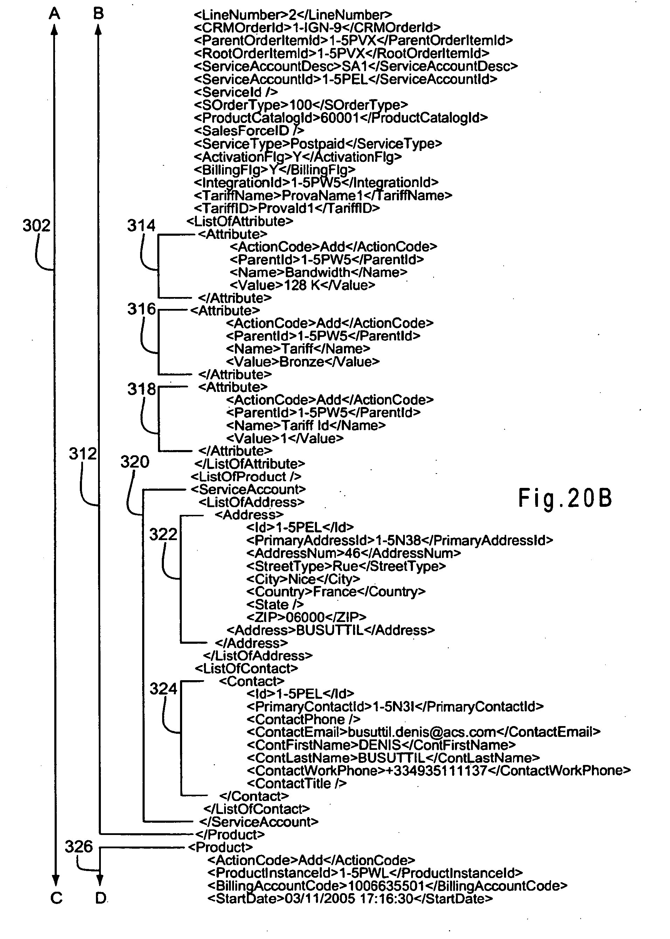

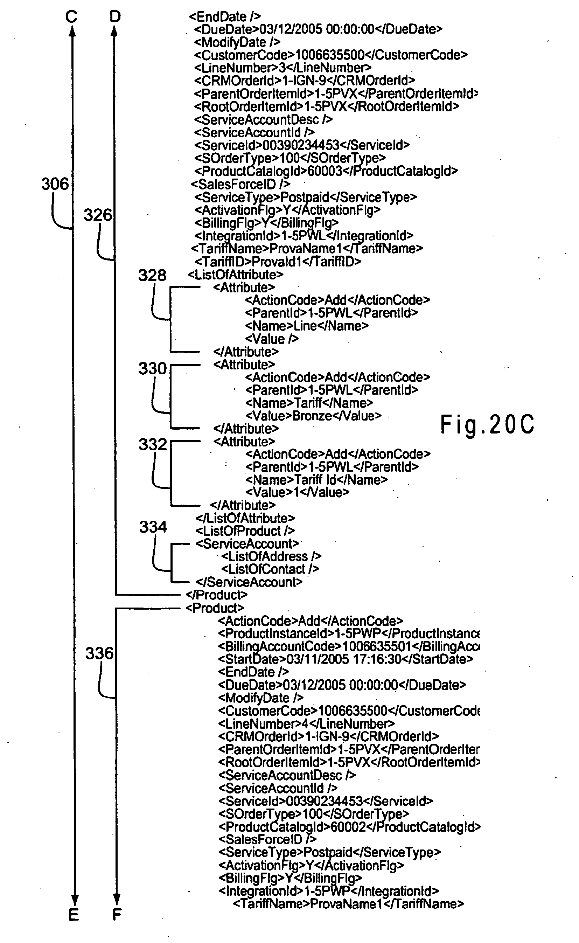

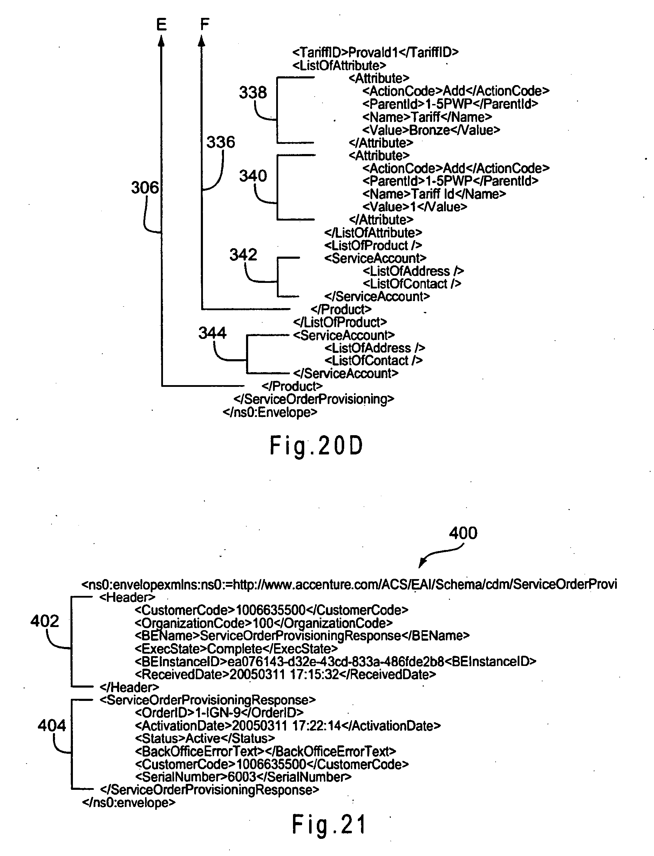

A Service Order For Provisioning business event is complete when the Service Order For Provisioning message is received by the provisioning system 20. However, the order provisioning process initiated by the Service Order For Provisioning business event continues. The tasks associated with provisioning the product or products identified in the Service Order For Provisioning message are carried out by the provisioning system 20 or other appropriate applications and their status is monitored by the IOM 22. The provisioning system 20 publishes a Service Order For Provisioning Response message each time it finishes provisioning a product. Thus, in the case of the Triple Play product, the provisioning system 20 publishes a service order for provisioning response for each of the Internet Access, the VoIP and IPTV Products and Triple-Play product itself. Fig. 21 shows a sample service order for provisioning response message published by the provisioning system 20. The service order for provisioning response message 400 includes two data objects, Header 402 and a Service Order Response 404. The header contains data fields for the CustomerCode, OrganizationCode, BusinessEventName, ExecutionState, BusinessEventInstanceID, and ReceivedDate similar to the Header data from the service order for provisioning message 300 of Fig. 20. The Service Order Response data object includes the data fields OrderID, ActivationDate, Status, BackOfficeErrorText, CustomerCode and SerialNumber. In the example shown, the OrderID field holds the value 1-IGN-9 which corresponds to the OrderID of the original Triple Play Product order created in the CRM 14. The Activation Data indicates the date on which the product was provisioned. The Status indicates that the product has been installed. The BackOfficeErrorText provides for custom messages to be sent to the CRM 14. (In this case the BackOfficeErrorText field is left open.) Finally, the SerialNumber contains the identifier of the provisioned item, in the example shown the SerialNumber field holds the value 6003 which corresponds to the VoIP product.

A Service Order For Provisioning Response business event is published by the provisioning system 20. By definition the CRM 14 is the only subscriber. The provisioning system 20 publishes a Service Order for Provisioning Response for each product it provisions. Returning to the sequence diagram of Fig. 18, the provisioning system 20 sends the Service Order For Provisioning Response message 212 to the EAI 12. The Service Order For Provisioning Response message is examined by the IOM 22. If the service order for provisioning response indicates that there has been a problem provisioning the product, the Service Order for Provisioning Response message is forwarded to the Exceptions database 202 at step 214, before being forwarded to the CRM 14 in step 216. If the Service Order For Provisioning response Message 212 received by the EAI indicates that the product was provisioned properly, the Service Order For Provisioning Response message is forwarded directly to the CRM 14 at step 216 without a message being sent to the Exceptions database 202.

Before the EAI 12 forwards the Service Order For Provisioning Response message to the CRM 14, the IOM 22 decomposes the message in order to update the provisioning task list that was created in response to the corresponding Service Order For Provisioning message published by the CRM 14 in response the original Triple Play order. For example, when the IOM receives the Service Order For Provisioning Response for the VoIP Product, the status of the "Provision VoIP" task may be updated from "Provisioning" to "Installed" or "Complete". After updating the task list the IOM 22 causes the EAI 12 to publish the Service Order For Provisioning Response message to the CRM 14 at step 216. The CRM echoes the received Service Order For Provisioning Response message back to the EAI at 218 to ensure that the message was accurately transmitted to and received by the CRM 14. Upon receiving the echoed response 218 from the CRM 14, the IOM 22 may consider the CRM Update task complete for the particular product for which the Service Order For Provisioning Response was published. Thus, in the context of the Triple Play product, the IOM 22 separately updates the CRMUpdate task for each of the composite products, namely Internet Access, VoIP and IPTV when the Service Order For Provisioning Response for each product is echoed back by the CRM 14.

At this point in the Triple Play provisioning process the only tasks that remain are the Internet Access activation, the VoIP activation, the IPTV activation, and the Triple Play CRM update. Activation of the various services may be accomplished in a number of different ways. For example, for internet protocol related services such as Internet Access, VoIP and IPTV, activation may be accomplished on-line via the Web portal 24. Alternatively activation may be initiated by a customer service representative via the CRM 14 or some other integrated application.

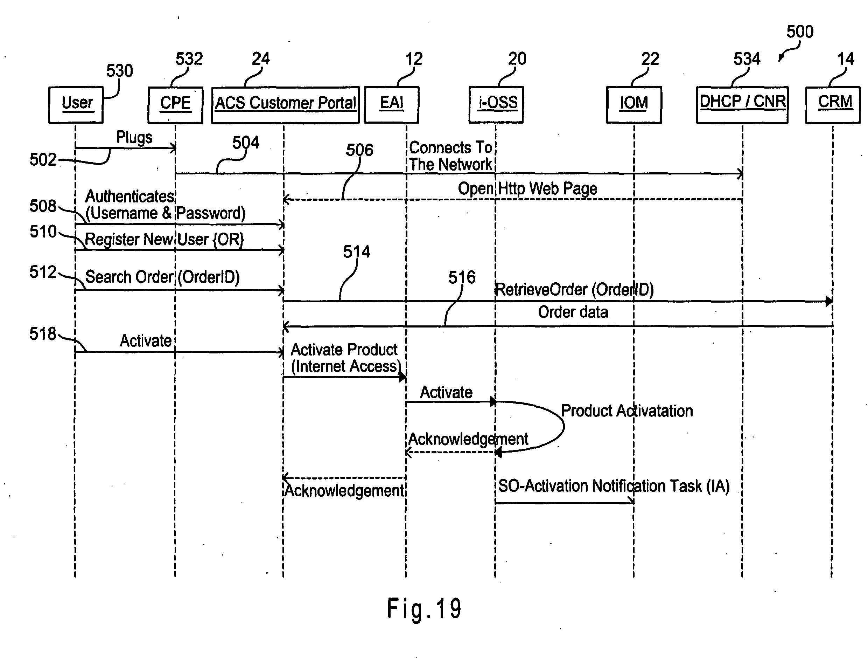

Fig. 19 shows a sequence diagram illustrating a customer self activation procedure for the Internet Access portion of the Triple Play product. The customer receives the customer premises equipment (CPE) necessary to for the customer to connect to the service provider's network at 502. Using the newly installed CPE equipment the customer connects to the service provider's network at 504. DHCP is a protocol to manage IP addresses for devices such as PCs, Modems, STBs, VoIP phones. CNR is a product that implements the protocol widely used by many telcommuncations service providers.The customer'sCPEs communicate to DHCP to obtain a proper IP address. The DHCP/CNR verifies that the MAC address received from the CPE 532 does not correspond to an existing previously activated MAC address and instructs the web portal 24 to open an HTTP web page for user self activation at 506. The user enters data in the various fields provided in the activation page, and the user's web browser transmits the user data to the web portal 24. The user entered data messages sent to the web portal 24 include Authentication Data (Username and Password) 508, RegisterNewUser 510, and SearchOrderID 512. Upon receiving the User Name and Password, the RegisterNewUser and SearchOrderId messages, 508, 510, 512, the web portal 24 sends a RetrieveOrder message 514 to the CRM 14. The CRM 14 responds by sending the customer order data to the web portal at 516. Once the web portal is armed with the customer's order data, the user may initiate the activation process from the customer's web browser. The user 530 sends the Activate command to the web portal 24 at 518. The web portal then publishes an Activation message to the provisioning system 20 via the EAI 12 at 520. The EAI forwards the Activation message to the provisioning system 20 at 522, and the provisioning system proceeds to activate the service. Upon completing the activation process the provisioning system 20 sends an Activation Acknowledgement message to the customer portal 24, again via the EAI 12 at 524 and 526. Finally, the provisioning system 20 sends a Service Order Activation notification to the IOM 22. The IOM 22, which is monitoring the status of the various provisioning tasks, is waiting for the Activation Acknowledgement for indication that the Internet Access activation task is complete. Upon receiving the activation acknowledgement the IOM may upgrade the status of the Internet Access Activation Task to "Complete".

In an alternative Activation sequence, a customer service representative (CSR) may manage the service activation through the CRM 14. Rather than the customer interacting with the web portal 24 and the web portal initiating the product activation process, the same or similar steps for activating the various products could be initiated by the CSR through the CRM 14.

As the IOM 22 task list indicates, all of the Triple Play products require separate activation. In addition to the Internet access product described above, the VoIP and IPTV products may be activated in a similar manner. Once all of the sub-products have been activated the IOM 22 may publish the Service Order For Provisioning Response message for the composite Triple Play product to the CRM 14 indicating that all of the provisioning tasks have been performed and that provisioning of the entire Triple Play product is complete. Thus, the Triple Play product, a composite product comprising a plurality of sub-products, (Internet Access, VoIP, IPTV) is successfully provisioned by the integration framework 10 in response to a single customer order.

While various embodiments of the invention have been described, it will be apparent to those of ordinary skill in the art that many more embodiments and implementations are possible within the scope of the invention, as defined by the attached claims.

## Claims

1. A system for provisioning, for a subscriber of telecommunications services, a composite telecommunications services product (306) comprising a plurality of telecommunications services sub-products (312, 326, 336), the system comprising:
an order entry module (14) for generating an order for the composite product (306), the order comprising multiple data objects, each data object corresponding to a respective sub-product of the composite product (306) and including a respective provisioning action code;
a product catalogue (22) comprising product configuration data for each of the sub-products, the product configuration data comprising a respective product configuration task list for each sub-product, of which at least a first respective product configuration task list includes at least a first provisioning task for provisioning a first sub-product among the respective sub-products of the composite product; and
an order management module (22) adapted to:
receive the order,
decompose the order to identify each of the plurality of sub-products (312, 326, 336) of the composite product (306);
- generate a list of tasks that must be performed to successfully provision each of the identified sub-products, the task list being generated based on product configuration data stored in the product catalogue;
- communicate the list of tasks to a provisioning module;
- receive a response message from the provisioning module (20), wherein the response message indicates a status of a task, and
- responsively update the status of the task.

2. The system of Claim 1, wherein the product catalog includes tasks associated with implementing the sub-products.

3. The system of Claim, 2 wherein the product catalog is organized in a hierarchical manner such that the composite product may be defined as a combination of the multiple sub-products, and the tasks associated with implementing the sub-products are associated with implementing the composite product.

4. The system of Claim 1, 2 or 3, wherein the composite telecommunications services product (306) comprises internet access (312), voice over internet protocol (326), and internet protocol television (336) sub-products.

5. The system of Claim 4, wherein the order management module is further adapted to communicate the updated status to the order entry module.

6. The system of Claim 4 or 5, wherein the tasks include at least one of provisioning internet access, shipping customer premises equipment, and activating the internet access service.

7. The system of Claim 4 or 5, wherein the tasks include at least one of provisioning internet protocol television service and activating internet protocol television service.

8. The system of claim 4 or 5, wherein the tasks include at least one of provisioning voice over internet protocol service and activating voice over internet protocol service.

9. A method of provisioning, for a subscriber of telecommunication services, a composite communications product comprising a plurality of communications services, the method comprising:
generating a customer order for the composite product in a customer relationship management application, the customer order comprising multiple data objects, each data object corresponding to a respective communications service within the composite product;
parsing the customer order to identify each of the plurality of communications services within the composite product;
- generating a list of tasks that must be performed to successfully provision each of the identified communications services, the task list being generated based on product configuration data stored in the product catalogue;
- communicating the list of tasks to a provisioning module;
- receiving a response message from the provisioning module (20), wherein the response message indicates a status of a task, and
- responsively updating the status of the task.

10. The method of Claim 9, wherein the plurality of communications services includes internet access, voice over internet protocol; and internet protocol television.

11. The method of Claim 9 or 10, wherein a first task comprises sending customer premises equipment to a customer, and a second task comprises comprises activating a communications service when customer premises equipment is installed at a customer's premises.

12. The method of Claim 9 or 10 or 11, wherein activating a communications service comprises contacting a web portal via the customer premises equipment and the web portal responsively communicating an activation request to the provisioning module.

13. The method of Claim 9, wherein the list of tasks comprises each service comprising the producer.

14. The method of Claim 13, further comprising communicating the list of tasks to the provisioning module (20).

15. The method of Claim 14, further comprising communicating provisioning responses from the provisioning module (20) to an order management application in communication with the customer relationship management application.

16. A machine readable medium including instructions which when executed by a data processing system, cause the data processing system to perform the method of any of claims 9-15.

## Patentansprüche

1. System zum Bereitstellen, für einen Teilnehmer an Telekommunikationsdiensten, eines zusammengesetzten bzw. mehrteiligen Telekommunikationsdienstprodukts (306), das eine Mehrzahl von Telekommunikationsdienstunter- bzw. - teilprodukten (312, 326, 336) umfasst, wobei das System umfasst:
ein Auftragseingangsmodul (14) zum Generieren eines Auftrags für das zu-sammengesetzte Produkt (306), wobei der Auftrag mehrere Datenobjekte um-fasst, wobei jedes Datenobjekt einem jeweiligen Teilprodukt des zusammengesetzten Produkts (306) entspricht und einen jeweiligen Bereitstellungsakti-onscode enthält;
einen Produktkatalog (22), der Produktkonfigurationsdaten für jedes der Teil-produkte umfasst, wobei die Produktkonfigurationsdaten eine jeweilige Produktkonfigurationstask- bzw. -aufgabenliste für jedes Teilprodukt umfassen, von denen zumindest eine erste jeweilige Produktkonfigurationstaskliste zu-mindest einen ersten Bereitstellungstask bzw. -aufgabe zum Bereitstellen ei-nes ersten Teilprodukts aus bzw. unter den jeweiligen Teilprodukten des zu-sammengesetzten Produkts enthält; und
ein Auftragsmanagementmodul (22), das angepasst ist:
- den Auftrag zu empfangen,
- den Auftrag zu zerlegen, um jedes der Mehrzahl von Teilprodukten (312, 326, 336) des zusammengesetzten Produkts (306) zu identifizieren;
- eine Liste von Tasks bzw. Aufgaben zu generieren, die durchgeführt wer-den müssen, um jedes der identifizierten Teilprodukte erfolgreich bereitzustellen, wobei die Taskliste basierend auf Produktkonfigurationsdaten generiert wird, die in dem Produktkatalog gespeichert sind;
- die Liste von Tasks an ein Bereitstellungsmodul zu kommunizieren;
- eine Antwortnachricht von dem Bereitstellungsmodul (20) zu empfangen, wobei die Antwortnachricht einen Status eines Tasks angibt, und
- ansprechend darauf den Status des Tasks zu aktualisieren.

2. System nach Anspruch 1, wobei der Produktkatalog Tasks enthält, die mit dem Implementieren der Teilprodukte assoziiert bzw. verknüpft sind.

3. System nach Anspruch 2, wobei der Produktkatalog auf hierarchische Weise organisiert ist, so dass das zusammengesetzte Produkt als eine Kombination der mehreren Teilprodukte definiert werden kann und die Tasks, die mit dem Implementieren der Teilprodukte verknüpft sind, mit dem Implementieren des zusammengesetzten Produkts assoziiert bzw. verknüpft sind.

4. System nach Anspruch 1, 2 oder 3, wobei das zusammengesetzte Telekom-munikationsdienstprodukt (306) Teilprodukte Internetzugang (312), Voice-over Internet Protocol (326) und Internet Protocol Television (336) umfasst.

5. System nach Anspruch 4, wobei das Auftragsmanagementmodul ferner angepasst ist, den aktualisierten Status an das Auftragseingangsmodul zu kommunizieren.

6. System nach Anspruch 4 oder 5, wobei die Tasks zumindest eines von Bereitstellen eines Internetzugangs, Versenden von Customer Premises Equipment bzw. Teilnehmerendgeräten und Aktivieren des Internetzugangsdiensts enthalten.

7. System nach Anspruch 4 oder 5, wobei die Tasks zumindest eines von Bereitstellen des Internet Protocol Television-Diensts und Aktivieren des Internet Protocol Television-Diensts enthalten.

8. System nach Anspruch 4 oder 5, wobei die Tasks zumindest eines von Bereitstellen des Voice over Internet Protocol-Diensts und Aktivieren des Voice over Internet Protocol-Diensts enthalten.

9. Verfahren zum Bereitstellen, für einen Teilnehmer an Telekommunikations-diensten, eines zusammengesetzten bzw. mehrteiligen Telekommunikations-dienstprodukts, das eine Mehrzahl von Telekommunikationsdienstunter- bzw. - teilprodukten umfasst, wobei das Verfahren umfasst:
- Generieren eines Kundenauftrags für das zusammengesetzte Produkt in einer Kundenbeziehungsmanagementanwendung bzw. -applikation, wobei der Kundenauftrag mehrere Datenobjekte umfasst, wobei jedes Datenobjekt einem jeweiligen Kommunikationsdienst in dem zusammengesetzten Produkt entspricht;
- Parsen des Kundenauftrags, um jeden der Mehrzahl von Kommunikationsdiensten innerhalb des zusammengesetzten Produkts zu identifizieren;
- Generieren einer Liste von Tasks bzw. Aufgaben, die durchgeführt werden müssen, um jedes der identifizierten Teilprodukte erfolgreich bereitzustel-len, wobei die Taskliste basierend auf Produktkonfigurationsdaten generiert wird, die in dem Produktkatalog gespeichert sind;
- Kommunizieren der Liste von Tasks an ein Bereitstellungsmodul;
- Empfangen einer Antwortnachricht von dem Bereitstellungsmodul (20), wobei die Antwortnachricht einen Status eines Tasks angibt, und
- ansprechend darauf Aktualisieren des Status des Tasks.

10. Verfahren nach Anspruch 9, wobei die Mehrzahl von Kommunikationsdiensten Internetzugang, Voice-over Internet Protocol und Internet Protocol Television enthält.

11. Verfahren nach Anspruch 9 oder 10, wobei ein erster Task das Versenden von Customer Premises Equipment bzw. Teilnehmerendgeräten an einen Kunden umfasst und ein zweiter Task das Aktivieren eines Kommunikationsdiensts umfasst, wenn das Customer Premises Equipment beim Kunden installiert wird.

12. Verfahren nach Anspruch 9 oder 10 oder 11, wobei das Aktivieren eines Kommunikationsdiensts das Kontaktieren eines Webportals über das Custo-mer Premises Equipment und das darauffolgende Kommunizieren des Web-portals einer Aktivierungsanfrage an das Bereitstellungsmodul umfasst.

13. Verfahren nach Anspruch 9, wobei die Liste von Tasks jeden Dienst umfasst, der das Produkt umfasst.

14. Verfahren nach Anspruch 13, ferner umfassend das Kommunizieren der Liste von Tasks an das Bereitstellungsmodul (20).

15. Verfahren nach Anspruch 14, ferner umfassend das Kommunizieren von Bereitstellungsantworten von dem Bereitstellungsmodul (20) an eine Auftragsmanagementanwendung bzw. -applikation, die mit der Kundenbeziehungsmanagementanwendung in Kommunikation ist.

16. Maschinenlesbares Medium, das Instruktionen enthält, die, wenn sie von ei-nem Datenverarbeitungssystem ausgeführt werden, das Datenverarbeitungs-system veranlassen, das Verfahren nach einem der Ansprüche 9-15 durchzuführen.

## Revendications

1. Système destiné à approvisionner, pour un abonné à des services de télécommunications, un produit composite de services de télé-communications (306) qui comprend une pluralité de produits secondaires de services de télécommunications (312, 326, 336),le système comprenant:
- un module d'entrée de commande (14) destiné à générer une commande du produit composite (306), la commande comprenant de multiples objets de données, chaque objet de données correspondant à un produit secondaire respectif du produit composite (306) et comprenant un code d'action d'approvisionnement respectif;
- un catalogue de produits (22) qui comprend des données de confi-guration de produit de chacun des produits secondaires, les données de configuration de produit comprenant une liste de tâches de configuration de produit respective de chaque produit secondaire, au moins une première liste de tâches de configuration de produit respective comprenant au moins une première tâche d'approvision-nement destinée à approvisionner un premier produit secondaire parmi les produits secondaires respectifs du produit composite; et
un module de gestion de commande (22) adapté pour :
- recevoir la commande;
- décomposer la commande de manière à identifier chacun de la pluralité de produits secondaires (312, 326, 336) du produit composite (306);
- générer une liste de tâches qui doivent être effectuées de façon à approvisionner avec succès chacun des produits secondaires iden-tifiés, la liste de tâches étant générée sur la base de données de configuration de produit stockées dans le catalogue de produits ;
- communiquer la liste de tâches à un module d'approvisionnement;
- recevoir un message de réponse en provenance du module d'approvisionnement (20), dans lequel le message de réponse indique l'état d'une tâche; et
- en réponse, mettre à jour l'état de la tâche.

2. Système selon la revendication 1, dans lequel le catalogue de produits comprend des tâches associées à la mise en application des produits secondaires.

3. Système selon la revendication 2, dans lequel le catalogue de produits est organisé d'une façon hiérarchique de telle sorte que le produit composite puisse être défini comme étant une combinaison de multiples produits secondaires, et les tâches associées à la mise en application des produits secondaires sont associées à la mise en application du produit composite.

4. Système selon l'une quelconque des revendications 1, 2 ou 3, dans lequel le produit de services de télécommunications composite (306) comprend des produits secondaires d'accès à Internet (312), de voix sur IP (326) et de télévision sur IP (336).

5. Système selon la revendication 4, dans lequel le module de gestion de commande est adapté en outre pour communiquer l'état mis à jour au module d'entrée de commande.

6. Système selon la revendication 4 ou la revendication 5, dans lequel les tâches comprennent au moins l'un d'un approvisionnement d'accès à Internet, de l'envoi d'un équipement de locaux de client, et de l'acti-vation d'un service d'accès à Internet.

7. Système selon la revendication 4 ou la revendication 5, dans lequel les tâches comprennent au moins l'un d'un approvisionnement de ser-vice de télévision sur IP et de l'activation d'un service de télévision sur IP.

8. Système selon la revendication 4 ou la revendication 5, dans lequel les tâches comprennent au moins l'un d'un approvisionnement de service de voix sur IP et de l'activation d'un service de voix sur IP.

9. Procédé destiné à approvisionner, pour un abonné à des services de télécommunications, un produit composite de communications qui comprend une pluralité de services de communication, le procédé comprenant les étapes consistant à:
- générer une commande de client du produit composite dans une application de gestion de relation client, la commande de client comprenant de multiples objets de données, chaque objet de données correspondant à un service de communications respectif à l'intérieur du produit composite;
- analyser la commande de client de manière à identifier chacun de la pluralité de services de communications à l'intérieur du produit composite;
- générer une liste de tâches qui doivent être effectuées de façon à approvisionner avec succès chacun des services de communications identifiés, la liste de tâches étant générée sur la base de données de configuration de produit stockées dans le catalogue de produits;
- communiquer la liste de tâches à un module d'approvisionnement;
- recevoir un message de réponse en provenance du module d'appro-visionnement (20), dans lequel le message de réponse indique l'état d'une tâche; et
- en réponse, mettre à jour l'état de la tâche.

10. Procédé selon la revendication 9, dans lequel la pluralité de services de communications comprend un accès à Internet, la voix sur IP et la télévision sur IP.

11. Procédé selon la revendication 9 ou la revendication 10, dans lequel une première tâche comprend l'envoi à un client d'un équipe-ment de locaux de client, et une seconde tâche qui comprend l'activa-tion d'un service de communications lorsque l'équipement de locaux de client est installé dans les locaux d'un client.

12. Procédé selon l'une quelconque des revendications 9, 10 ou 11, dans lequel l'activation d'un service de communications comprend une mise en contact avec un portail Web par l'intermédiaire de l'équipe-ment de locaux de client, et en réponse, le portail Web communique une demande d'activation au module d'approvisionnement.

13. Procédé selon la revendication 9, dans lequel la liste de tâches comprend chaque service qui comprend le produit.

14. Procédé selon la revendication 13, comprenant en outre la com-munication de la liste des tâches au module d'approvisionnement (20).

15. Procédé selon la revendication 14, comprenant en outre la com-munication des réponses d'approvisionnement en provenance du module d'approvisionnement (20) à une application de gestion de commande en communication avec l'application de gestion de relation client.

16. Support pouvant être lu par une machine, qui comprend des ins-tructions qui, quand elles sont exécutées par un système de traitement de données, provoquent l'exécution du procédé selon l'une quelconque des revendications 9 à 15 par le système de traitement de données.
